# EUROPEAN PATENT APPLICATION

(11) **EP 0 841 610 A2**
(43) Date of publication of application: **13.05.1998**
(21) Application number: 97308843.8
(22) Date of filing: 04.11.1997
(51) Int. Cl.: G06F 3/033

(54) **Hot areas in interactive movies**

(30) Priority: 12.11.1996 US 747368
(71) Applicant: Adobe Systems, Inc., San Jose, California 95110 (US)
(72) Inventor: Kaufman, Marc, Woodside, California 94062 (US)
(74) Representative: Wombwell, Francis

(57) **Abstract**

A method playing a movie for interaction with a human user that includes receiving a visual movie on a computer; receiving an object movie on the computer; and playing the visual movie on a monitor and the object movie into a memory buffer while receiving a cursor position input, using the position to select a pixel from the object movie buffer, and using the value of the selected pixel as an index to identify a hot area selected by the user. In embodiments, the visual movie and the object movie are received from a second system; the visual movie and the object movie are received in AVI format or in MOV format; the visual movie and the object movie are received in frames interleaved with each other; the visual movie and the object movie are received in parallel; the object movie is defined by data in a plane of the visual movie that is not used to display the visual movie on the monitor; the range of index values has a bit depth of 8, 4, or 1; the visual movie includes a sequence of drawings; the object movie includes a sequence of drawings; or the visual movie and the object movie each consist of a single still image or drawing.

## Description

### Background

The invention relates to computer program graphical user interfaces displaying user-selectable objects or areas in animations or movies, and more particularly to interface displays generated by programs such as web browsers that display moving objects in animations or movies downloaded across a network.

Computer program interfaces have long provided user-selectable graphics, such as buttons, as elements through which a user may interact with a computer program, for example, to select an option or request a service from the program. In network-based or distributed computer program applications, the selection of an interface element in a client program on one computer may be directed to either that program or to another program, such as a server program on a separate computer. In Internet and intranet applications, the server program typically resides on a server computer remote from the client computer and connected to it by a network connection that may include both private and public switched network facilities of limited bandwidth.

One widely distributed and used class of client program is the browser, such as the Netscape Navigator™ browser, available from Netscape Communications Corporation of Mountain View, California. Browsers typically provide support for a number of industry standard protocols, such as HTTP (HyperText Transport Protocol), and industry standard formats such as HTML (HyperText Markup Language), AVI, and MOV. AVI (Audio Video Interleaved) and MOV (Movie Digital Video) are multimedia file formats used by Microsoft Corporation's Video for Windows™ (VFW) product and Apple Computer, Inc.'s QuickTime for Macintosh™ and QuickTime for Windows™ products, respectively.

An HTML document may include links to other resources. Graphically, the simplest form of link is the URL (Universal Resource Locator) of the resource displayed in the familiar form of underlined text. Access to a resource may also be provided through an image that a user may select to request the resource. The HTML specification includes a MAP element and an IMG element with an ISMAP attribute for this purpose. The ISMAP element can be used to define a server-side map. When the user clicks on the image, the ISMAP attribute of the element causes the image (x,y) coordinates of location clicked to be passed to the server in a derived URL. A MAP element may be used with an IMG element to provide a client-side image map. AREA elements define simple closed regions, such as polygons and circles, by their coordinates within the image. AREA elements in a MAP element can define hot areas on the image and link the hot areas to URLs.

An alternative approach to identifying areas in an image is disclosed in U.S. Patent No. 4,847,604. There, the index space of an indexed-color image is divided among the objects in the image, so that distinct ranges of index values correspond to and identify distinct objects. In this way, when a user clicks on a location, the index pixel value at that location -- in addition to being an index into a CLUT (color lookup table) for the image -- also identifies the object the user selected. This technique requires that images be transmitted in a lossless manner, since a single pixel change can cause the correct identification of an object to be lost.

Another technique for identifying areas within an image, called a PolyMap, has been proposed. In this method, a list of polygons outlining areas of interest in an image is separately encoded in an HTML definition of the page containing the image. Each polygon has associated with it a URL. When a point within the image is clicked on, the client program scans the list of polygons to identify the polygon that contains the clicked point. When the polygon is identified, the URL associated with that polygon is sent to the server.

Extending the idea of a map with hot areas, an animated graphic such as a movie may have moving hot areas corresponding to moving objects shown in the movie. In clicking on a displayed moving object, a user selects one of the hot areas, each of which is, in effect, a button that invokes a resource, feature, or service.

In one conventional method of displaying selectable moving objects, the objects are placed on foreground layers of a movie. To link a cursor click event with an object, the layers are examined from front to back at the cursor position, and the first layer that is not transparent at that position identifies the selected object. This allows the object to be identified locally, that is, on the computer playing the movie, but requires substantial overhead in playing the multiple layers of the movie and in identifying the selected object.

In another method, a description of the positions of the moving objects in time is represented by a script that is processed by a special-purpose computer program, such as a Netscape plug-in module. This method requires substantial overhead.

### Summary

In general, in one aspect, the invention features a method playing a movie for interaction with a human user. The method includes receiving a visual movie on a system of a type characterized by having a display monitor and a pointing device operatively coupled to a cursor displayed on the monitor, receiving an object movie having pixels with values in a range of index values, playing the visual movie on the monitor and the object movie into a memory buffer in synchronization with each other while receiving an input of a position from the pointing device, and using the received position to select a pixel from the object movie buffer and using the value of the selected pixel as an index to identify a hot area selected by the user. Preferred embodiments of the invention include one or more of the following features. The visual movie and the object movie are received from a second system. The visual movie and the object movie are received in AVI format or in MOV format. The visual movie and the object movie are received in frames interleaved with each other. The visual movie and the object movie are received in parallel. The object movie is defined by data in a plane of the visual movie that is not used to display the visual movie on the monitor. The range of index values has a bit depth of 8, 4, or 1. The visual movie includes a sequence of drawings. The object movie includes a sequence of drawings. The visual movie and the object movie each consist of a single still image or drawing.

In general, in another aspect, the invention features a method playing a movie for interaction with a human user. The method includes receiving the movie on a system of a type characterized by having a display and a pointing device operatively coupled to a cursor displayed on the display, playing a first portion of the movie on the display and a second portion of the movie into a memory buffer in synchronization with the display of the first portion while receiving an input of a position from the pointing device, and using the received position to select a pixel from the memory buffer and using the value of the selected pixel to identify a hot area selected by the user. Preferred embodiments of the invention include one or more of the following features. The resolution of the buffer is the same as the resolution at which the first portion of the movie is played. The first and the second portions of the movie are alternating frames of the movie. The first and the second portions of the movie are a first and a second set of bits of each pixel of the movie.

In general, in another aspect, the invention features a method providing a user on a client computer a display of user-selectable moving objects. The method includes sending to the client computer from a server computer a two-part movie having display pixels defining a visual movie and index pixels defining an object movie, and receiving an index pixel value from the client computer as indicating the selection by the user of one of the user- user-selectable objects.

In general, in another aspect, the invention features a computer program, tangibly stored on a computer-readable medium, having instructions for a computer having a display and a pointing device operatively coupled to a cursor displayed on the display, the instructions causing the computer to receive a movie, play a first portion of the movie on the display and a second portion of the movie into a memory buffer in synchronization with the display of the first portion while receiving an input of a position from the pointing device, and use the received position to select a pixel from the memory buffer and use the value of the selected pixel to identify a hot area selected by the user.

Among the advantages of the invention are one or more of the following. Authoring tools for the visual part of a movie can be used to generate tracking masks for hit detection automatically. The visual images associated with the movie can be compressed using lossy compression techniques, such as JPEG or MPEG, without compromising hit detection. Image color spaces (index or full color) can be selected without regard to the number of hot areas in the image, and without loss of color fidelity due to truncation of the available number of index entries per object or hot-area.

Other features and advantages of the invention will become apparent from the following description and from the claims.

### Brief Description of the Drawings

FIG. 1 is a logical block diagram of a client and server computer programmed in accordance with the present invention.

FIG. 2 is a flow chart of a method of playing a movie with moving hot areas in accordance with the present invention.

FIG. 3 is a flow chart of a method of identifying a moving hot area in a movie played in accordance with the present invention.

FIG. 4 is a flow chart of a method of creating a movie with moving hot areas in accordance with the present invention.

### Detailed Description

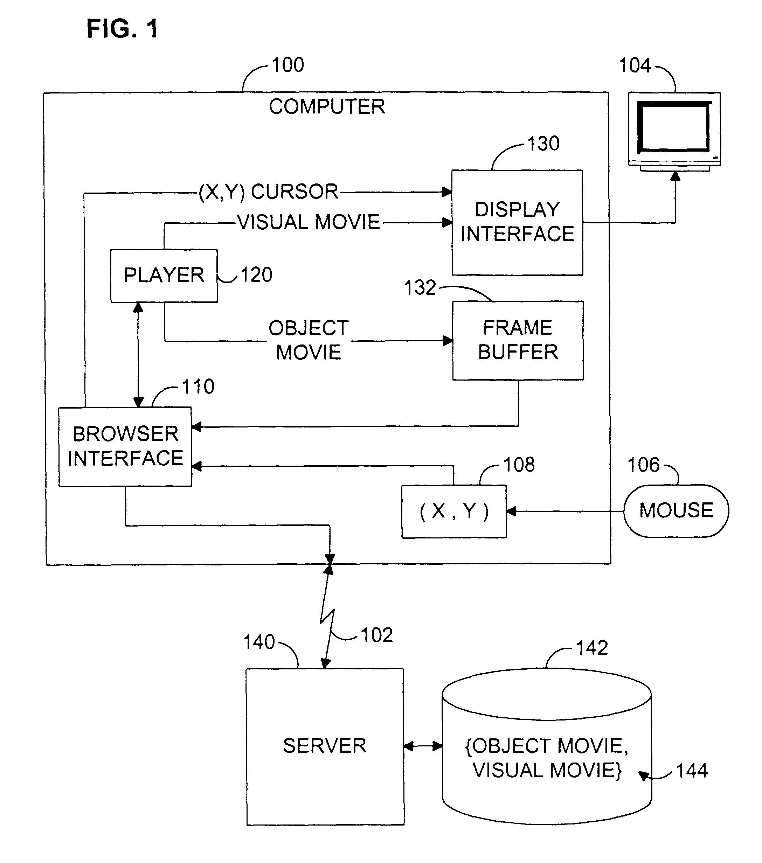

Referring to FIG. 1, a computer 100 running client software is connected over a communications link 102 to a computer 140 running server software that is linked (statically or dynamically) to a data store 142 containing movies with hot areas, such as movie 144. The client software (which may include one or more separate programs, as well as plug-in modules and operating system extensions) typically displays information on a display device such as a monitor 104 and receives user input from a keyboard (not shown) and a cursor positioning device such as a mouse 106. The computer 100 is generally programmed so that movement by a user of the mouse 104 results in corresponding movement of a displayed cursor graphic on the display 104.

The programming of computer 100 includes an interface 108 that receives position information from the mouse 106 and provides it to applications programs running on the computer 100. One such application is a browser that has an interface module 110 and a player 120. In response to a request embedded in a document it is displaying, for example, the browser may request a movie 144 from server 140 to be played within a figure box, for example, in the displayed document. A movie 144 made in accordance with the present invention has two logical parts, a part for display (the visual movie) and a part for tracking objects (the object movie), which parts may be, but need not be, physically separate. When played by player 120, the visual part of the movie 144 is output in a conventional way to a display interface 130, and the object movie (the part of the movie that tracks objects) is output to a frame buffer 132 that can be read by the interface module 110. The frame buffer 132 thus serves as a memory buffer to which an object-tracking object movie corresponding to the visual movie is played.

In the object movie, each tracked object is assigned its own color -- more correctly, its own pixel value, since the object movie pixels are never used for display -- distinct from the pixel values assigned to all other objects and areas, such as the background. Because the movie played into frame buffer 132 will not be displayed, the bit depth of frame buffer 132 need not correspond to, or be as large as, the bit depth provided through display interface 130, and the assigned pixel values can be assigned as sequential index numbers identifying objects and areas of the visual movie. When a mouse click event occurs with the cursor in the movie display area, the (x,y) position of the cursor can readily be translated into a position in the frame buffer 132, from which frame buffer position the pixel can be read by the browser interface module 110. Based on the pixel value, the browser can immediately determine which object (i.e., which hot area) the user clicked on, if any. From the selection can then derive, for example, an HTTP request to server 140.

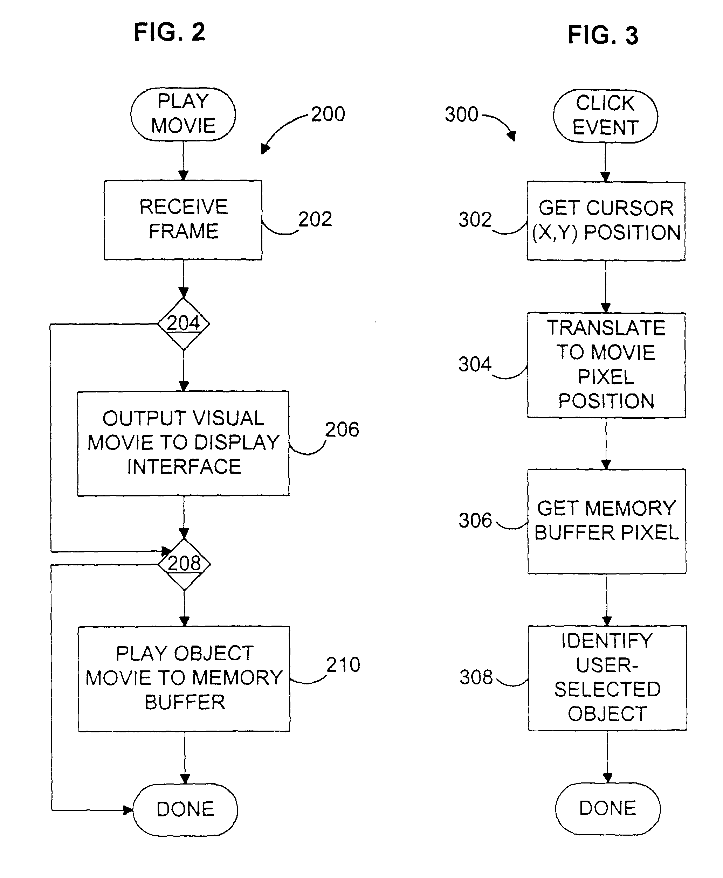

Referring to FIG. 2, a method 200 of playing a movie with moving hot areas can be readily implemented in a movie player like the QuickTime or VFW players. When the player has received and processed a movie frame (step 200), it determines whether the frame contains any visual movie information (decision step 204). If so, that information is played to the display device (step 206). Then the player determines whether the frame contains any object movie information for the memory buffer (decision step 208). If so, the object movie pixels are played to the memory frame buffer (step 210). In this way, the player in essence plays a second movie into a memory buffer, such as frame buffer 132 (FIG. 1), in synchrony with the visual movie, and the second movie tracks or locates, by its pixel values, hot areas in the first movie.

Referring to FIG. 3, when a user through an interface device selects a location on the movie being played, for example by a mouse click, a method 300 is invoked to identify the object selected by the user. First, the cursor position is obtained (step 302). This is translated into a pixel position within the movie frame (step 304). Using this pixel position, the corresponding pixel is read from the memory buffer (step 306) and used to identify the user-selected object (step 308).

When the selected object is identified, the identification may be used by the browser to select or define a request, by selecting or defining a URL, for example, to submit to a server. The method and apparatus may also be used in a fully local HTML-based application, one on CD-ROM, for example, which does not require or use a server. The method and apparatus may also be used in other applications that play movies, so that moving movie objects can be used in the same way as buttons are used in a computer environment.

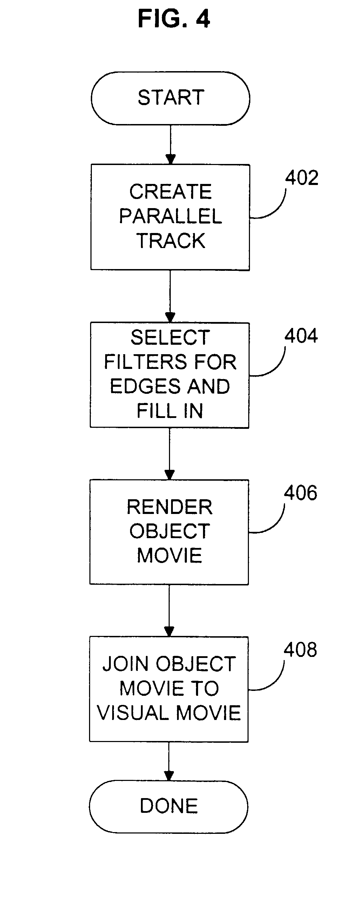

Referring to FIG. 4, a movie with hot areas can be created using a movie authoring or editing product such as Adobe Premiere®, available from Adobe Systems Incorporated of San Jose, California. In such a product, one can generally author a parallel track based on a movie, thereby creating an object movie of one of the kinds that has been described (step 402). The object movie can be rendered into an otherwise unused channel of the movie -- the alpha channel is generally unused -- or it can be rendered into a separate movie file. A variety of filters and plug-ins are available the can simplify the process. For example, familiar Photoshop® plug-ins run in Adobe Premiere, and these include filters for identifying edges and contrast boundaries and filling in areas defined by edges and boundaries. Selecting filters appropriate to the particular movie the user is working with (step 404), a user of a movie editing program can designate hot areas in the movie, create tracking masks for them automatically in a parallel track, and color them with distinct colors, leaving background or other areas of no interest in a background color. The user can then render the parallel track with a color map that causes the object movie to have a minimum pixel bit depth, to make the object movie compact (step 406). The object movie may then be compressed, which will generally yield a substantial reduction in size, because the object movie will generally be made up of a small number of large monochrome areas that are readily compressed.

The object movie and visual movie may then have to be linked or joined (step 408). This may have to be done in the rendering step by rendering the object movie into an unused channel or pixel plane of the visual movie. Otherwise, the visual and object movies may be linked externally, for example by an HTML element identifying a source for each of them. In such an element, or in a related element, the user can also link object movie pixel values, on the one hand, and resource descriptors, URLs, or other programmatic attributes and values, on the other hand. Having this information, whether from an HTML element or otherwise, an application such as a browser can recognize and respond to a selection event pointing to a location within the visual movie as it plays.

The invention may be implemented in digital electronic circuitry or in computer hardware, firmware, software, or in combinations of them. Apparatus of the invention may be implemented in a computer program product tangibly embodied in a machine-readable storage device for execution by a computer processor; and method steps of the invention may be performed by a computer processor executing a program to perform functions of the invention by operating on input data and generating output. Suitable processors include, by way of example, both general and special purpose microprocessors. Generally, a processor will receive instructions and data from a read-only memory and/or a random access memory. Storage devices suitable for tangibly embodying computer program instructions include all forms of non-volatile memory, including by way of example semiconductor memory devices, such as EPROM, EEPROM, and flash memory devices; magnetic disks such as internal hard disks and removable disks; magneto-optical disks; and CD-ROM disks. Any of the foregoing may be supplemented by, or incorporated in, specially-designed ASICs (application-specific integrated circuits).

Other embodiments are within the scope of the following claims. For example, the order of steps of the invention may be changed. The computer running the client software and displaying movies may a single-user or a multi-user platform, or it may be an embedded computer, such as in a consumer television, personal digital assistant, Internet surfing, or special-purpose appliance product. The object movie need not have the same resolution as the visual movie. The object movie need not have the same frame rate as the visual movie. The object movie need not have the same bit depth as the visual movie. The object movie may be defined by a pixel plane of one or more pixel bits otherwise unused in the visual movie. The frames of the object movie may interleave frames of the visual movie.

## Claims

1. A method playing a movie for interaction with a human user, comprising:
receiving a visual movie on a system of a type characterized by having a display monitor and a pointing device operatively coupled to a cursor displayed on the monitor;
receiving an object movie having pixels with values in a range of index values;
playing the visual movie on the monitor and the object movie into a memory buffer in synchronization with each other while receiving an input of a position from the pointing device; and
using the received position to select a pixel from the object movie buffer and using the value of the selected pixel as an index to identify a hot area selected by the user.

2. The method of claim 1 where
the visual movie and the object movie are received from a second system.

3. The method of claim 2 where
the visual movie and the object movie are received in AVI format or in MOV format.

4. The method of claim 1 where
the visual movie and the object movie are received in frames interleaved with each other.

5. The method of claim 1 where
the visual movie and the object movie are received in parallel.

6. The method of claim 1 where
the object movie is defined by data in a plane of the visual movie that is not used to display the visual movie on the monitor.

7. The method of claim 1 where
the range of index values has a bit depth of 8, 4, or 1.

8. The method of claim 1 where the visual movie comprises a sequence of drawings.

9. The method of claim 8 where the object movie comprises a sequence of drawings.

10. The method of claim 1 where the visual movie and the object movie each consist of a single still image or drawing.

11. A method playing a movie for interaction with a human user, comprising:
receiving the movie on a system of a type characterized by having a display and a pointing device operatively coupled to a cursor displayed on the display;
playing a first portion of the movie on the display and a second portion of the movie into a memory buffer in synchronization with the display of the first portion while receiving an input of a position from the pointing device; and
using the received position to select a pixel from the memory buffer and using the value of the selected pixel to identify a hot area selected by the user.

12. The method of claim 11 where
the bit depth of the buffer is 8, 4, or 1.

13. The method of claim 11 where
the resolution of the buffer is the same as the resolution at which the first portion of the movie is played.

14. The method of claim 11 where
the first and the second portions of the movie are alternating frames of the movie.

15. The method of claim 11 where
the first and the second portions of the movie are a first and a second set of bits of each pixel of the movie.

16. A method providing a user on a client computer a display of user-selectable moving objects, comprising:
sending to the client computer from a server computer a two-part movie having display pixels defining a visual movie and index pixels defining an object movie; and
receiving an index pixel value from the client computer as indicating the selection by the user of one of the user- user-selectable objects.

17. A computer program, tangibly stored on a computer-readable medium, comprising instructions for causing a computer having a display and a pointing device operatively coupled to a cursor displayed on the display to:
receive a movie;
play a first portion of the movie on the display and a second portion of the movie into a memory buffer in synchronization with the display of the first portion while receiving an input of a position from the pointing device; and
use the received position to select a pixel from the memory buffer and use the value of the selected pixel to identify a hot area selected by the user.
